# EUROPEAN PATENT SPECIFICATION

(11) **EP 3 414 996 B1**
(45) Date of publication and mention of the grant of the patent: **03.02.2021**
(21) Application number: 16889758.5
(22) Date of filing: 09.12.2016
(51) Int. Cl.: A01G 31/02

(54) **HYDROPONIC DEVICE**
HYDROPONISCHE VORRICHTUNG
DISPOSITIF HYDROPONIQUE

(30) Priority: 08.02.2016 JP 2016021862
(43) Date of publication of application: 19.12.2018
(73) Proprietor: Panasonic Intellectual Property Management Co., Ltd., Osaka-shi, Osaka 540-6207 (JP)
(72) Inventor: OGATA, Satoshi, Osaka-shi, Osaka 540-6207 (JP); ISHIDOU, Tarou, Osaka-shi, Osaka 540-6207 (JP)
(74) Representative: Müller-Boré & Partner Patentanwälte PartG mbB
(86) International application number: PCT/JP2016/005091
(87) International publication number: WO 2017/138054

(56) References cited:
- WO-A1-2014/188932
- JP-A- S 645 434
- JP-A- H04 271 731
- JP-A- H07 227 162
- JP-A- H07 227 162
- JP-A- 2015 053 904
- JP-A- 2016 010 388
- JP-U- S5 512 349
- JP-U- S5 824 165
- JP-U- H04 103 454
- JP-U- S58 146 453
- KR-A- 20150 129 923
- US-A- 4 908 985
- US-A1- 2012 186 153
- US-A1- 2015 327 451

## Description

### TECHNICAL FIELD

The present invention relates to a hydroponic cultivation apparatus for cultivating plants without using soil.

### BACKGROUND ART

In conventional hydroponic cultivation apparatuses, as described in the following Patent Literature 1, a partitioning portion that partitions an aboveground space where aboveground part of a plant grows and an underground space where underground part of the plant grows is provided in a cultivation tank. A light source is provided in the aboveground space. Therefore, light emitted by the light source is irradiated to the aboveground part of the plant, but is blocked by the partitioning portion. As a result, the light emitted by the light source does not reach the underground part of the plant.

"US 2015/327451 A1" describes a hydroponic cultivation kit which enables taking a plant seedling, intact in its planting soil, out of a growth pot and replanting it. Within a growth pot prepared in advance, a plant seedling or the like planted in soil is taken out of the growth pot together with the soil and cultivated in a culture solution. The hydroponic cultivation kit is furnished with: foam stone for surrounding the soil periphery of the plant taken out from the growth pot; a retaining mesh pot for retaining the plant with its soil periphery surrounded by the foam stone; and a buoyant member for floating the mesh pot in culture solution inside a water-tank unit. The mesh pot has perforations such as to prohibit the foam stone from passing through it, yet meanwhile permit passage of roots jutting out from the plant.

"JP 2015 053904 A" describes a hydroponic apparatus which waters an underground part in order to raise a plant that accumulates nutrient synthesized in an above-ground part in an underground part. The hydroponic apparatus comprises: a space part which houses the underground part in a substantially sealed state; a sensor part which detects moisture content of the space part in the underground part or around the underground part; an air-conditioning fan which introduces outside air into the space part and controls temperature and humidity in the space part; and a control part which drives an air-conditioning fan so as to adjust an outside air amount or outside air introduction time and controls the moisture content detected by the sensor part.

"JP H07 227162 A" describes a solution culture apparatus with a culture tank for holding a culture solution and a top lid fitting the culture tank. The top lid is provided with detachable pots which form culture bed with culture soil filled in the pots and the pot has an opening having nearly V-shaped horizontal cross section to enable the passage of plant root.

### CITATION LIST

### PATENT LITERATURE

Patent Literature 1: Japanese Unexamined Patent Application Publication No. 2010-268787

### SUMMARY OF INVENTION

### PROBLEM TO BE SOLVED BY INVENTION

According to the conventional hydroponic cultivation apparatuses described above, after installing the partitioning member to the cultivation tank, in order to observe the underground part of the plant, it is necessary to remove the partitioning portion from the cultivation tank. Therefore, work to observe the underground part of the plant becomes complicated.

The present invention has been made in view of such conventional problems. It is an object of the present invention to provide a hydroponic cultivation apparatus which can readily perform the work of observing underground part of a plant.

### SOLUTION TO PROBLEM

The invention is defined by the appended claims.

### EFFECT OF INVENTION

According to the present invention, it is possible to readily perform the work of observing underground part of a plant.

### BRIEF DESCRIPTION OF DRAWINGS

[Fig. 1] Fig. 1 is an exploded plan view of a partitioning portion of a hydroponic cultivation apparatus of an embodiment.
[Fig. 2] Fig. 2 is a view showing a state in which a part of a partitioning portion of the hydroponic cultivation apparatus of the embodiment is installed above the cultivation tank.
[Fig. 3] Fig. 3 is a view showing a state in which all the partitioning portions of the hydroponic cultivation apparatus of the embodiment are installed above the cultivation tank.
[Fig. 4] Fig. 4 is an exploded plan view of a light shielding member of the hydroponic cultivation apparatus of the embodiment.
[Fig. 5] Fig. 5 is an exploded cross-sectional view of a light shielding member of the hydroponic cultivation apparatus of the embodiment.
[Fig. 6] Fig. 6 is a perspective view showing the whole configuration of the hydroponic cultivation apparatus of the embodiment.
[Fig. 7] Fig. 7 is a schematic longitudinal sectional view of the hydroponic cultivation apparatus of the embodiment, in which a door member is closed.
[Fig. 8] Fig. 8 is a schematic longitudinal sectional view of the hydroponic cultivation apparatus of the embodiment, in which the door member is opened.
[Fig. 9] Fig. 9 is a schematic longitudinal sectional view of a modified example of the hydroponic cultivation apparatus of the embodiment, in which the door member is opened.

### DESCRIPTION OF EMBODIMENTS

Hereinafter, a hydroponic cultivation apparatus of an embodiment will be described with reference to the drawings.

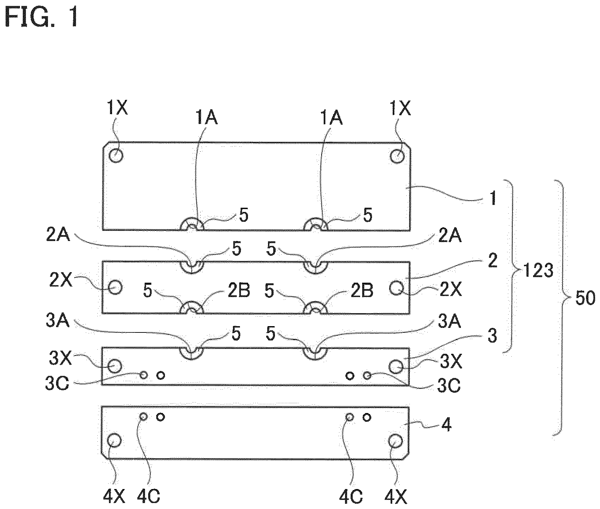

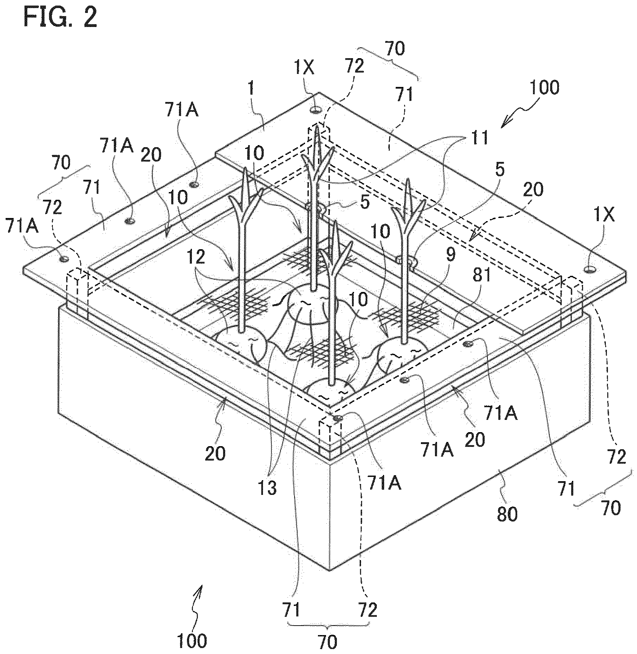

As shown in Fig. 1, the hydroponic cultivation apparatus of the embodiment is provided with a partitioning portion 50 that has a light shielding property. The partitioning portion 50 is for preventing light from reaching underground part of a plant, as described in detail below. The partitioning portion 50 comprises a fixed member 123 and a door member 4. The fixed member 123 is fixed indirectly to a cultivation tank to be described below via a supporting portion 70 (see Fig.2) to be described. The door member 4 is attached to the fixed member 123 so as to be movable with respect to the fixed member 123, as described below.

The fixed member 123 comprises a plate like member 1, a plate like member 2 adjacent to the plate like member 1, and a plate like member 3 adjacent to the plate like member 2. The door member 4 is a plate like member adjacent to the plate like member 3.

The plate like member 1 has two through holes 1X penetrating in its thickness direction and two semicircular shapes of notches 1A that are formed on the end surface adjacent to the plate like member 2. Screws to be described below are inserted into the two through holes 1X. Arcuate shape of elastic members 5 are attached to the notches 1A.

The plate like member 2 has two through holes 2X penetrating in its thickness direction. Screws to be described below are inserted into the two through holes 2X. The plate like member 2 has two semicircular shapes of notches 2A that are formed on the end surface adjacent to the plate like member 1 and two semicircular shapes of notches 2B that are formed on the end surface adjacent to the plate like member 3. The semicircular shape of notch 1A of the plate like member 1 and the semicircular shape of notch 2A of the plate like member 2 form one circular through hole as a whole. Elastic members 5, each of which has an arcuate like shape, are attached to the notch 2A and the notch 2B, respectively.

In the plate like member 3, two through holes 3X penetrating in its thickness direction are formed. Screws to be described below are inserted into the two through holes 3X. The plate like member 3 has two semicircular shapes of notches 3A that are formed on the end surface adjacent to the plate like member 2. The semicircular shape of notch 2B of the plate like member 2 and the semicircular shape of notch 3A of the plate like member 3 form one circular through hole as a whole. The elastic member 5, which has an arcuate like shape, is attached to the notch 3A. Further, four screw holes 3C are formed in the plate like member 3. Screws to be described below are screwed into the four screw holes 3C.

As can be understood from the above, the plate like member 1 and the plate like member 2 adjacent thereto have a pair of notches 1A and 2A on a pair of opposing surfaces facing each other. The plate like member 2 and the plate like member 3 adjacent thereto have a pair of notches 2B and 3A on a pair of opposing surfaces facing each other. These pairs of notches form the aforementioned through hole as a whole.

In the door member 4, two through holes 4X and four screw holes 4C penetrating in its thickness direction are formed. Screws for temporary fixing, which will be described below, are inserted into the two through holes 4X. Screws to be described below are screwed into the four screw holes 4C. The door member 4 constitutes the plate like member at the outermost, that is, the end portion of the plurality of plate like members arranged side by side along one direction.

The elastic member 5 described above is elastically deformed according to a shape of a stem of a plant. Each of the plurality of elastic members 5 is preferably a member having flexibility and is, more preferably, a member such as a urethane sponge (urethane foam), or a rubber sponge, for example. The elastic member 5 is preferably black which absorbs light. In this case, the opposing two of elastic members 5 cooperatively plug the gaps between each of the notches 1A, 2A, 2B, 3A, and 3B and the stem as the aboveground part 11 while deforming elastically. Therefore, at the same time at which the partitioning portion 50 is installed, it is possible to close the gaps between the openings and the stems.

Since the partitioning portion 50 is for suppressing the arrival of light to the underground parts 12, it is desirable that the partitioning portion 50 has a color that absorbs light such as black. Even if there is a small gap between the plate like members 1, 2, or 3 or between the plate like member 3 and the door member 4, since the black absorbs the light, it is possible to keep the underground space in a dark state.

In the present embodiment, as described above, the notches of plate like members of the partitioning portion 50, which are mutually opposing, as a whole form a circular opening through which the stem of the plant penetrates. However, the notch constituting the opening through which the stem of the plant penetrates may be provided only in one plate like member. Further, the shape of the opening need not be circular as long as the stem of the plant 10 is not damaged. Furthermore, for example, if the diameter of a circular opening formed by a pair of semicircular notches is about 4 cm, in some cases, it is suitable for bunching about four stems. The gap between the circular opening and the stem may be covered with a flexible light shielding sheet that covers the entire of the partitioning portion 50 but has holes through which only a plurality of stems penetrates.

As shown in Fig. 2, the hydroponic cultivation apparatus 100 comprises a cultivation tank 80. The cultivation tank 80 is provided with a supporting portion 70 for supporting the partitioning portion 50 described above. The supporting portion 70 comprises four pillar portions 72 extending upward and downward from the inside of each of the four corners of the cultivation tank 80. The supporting portion 70 comprises a frame portion 71 having four rectangular shapes. The four corner portions of the frame portion 71 of the rectangular shape are fixed to the upper ends of the four pillar portions 72, respectively.

As shown in Fig. 2, at the time of assembling the hydroponic cultivation apparatus 100, first, the plate like member 1 is placed on the frame portion 71. In the frame portion 71, a through hole 71A penetrating in its thickness direction is formed. Between the frame portion 71 and the cultivation tank 80, there exists a gap serving as a flow path 20 of air for communicating the internal space of the cultivation tank 80 with the external space of the cultivation tank 80.

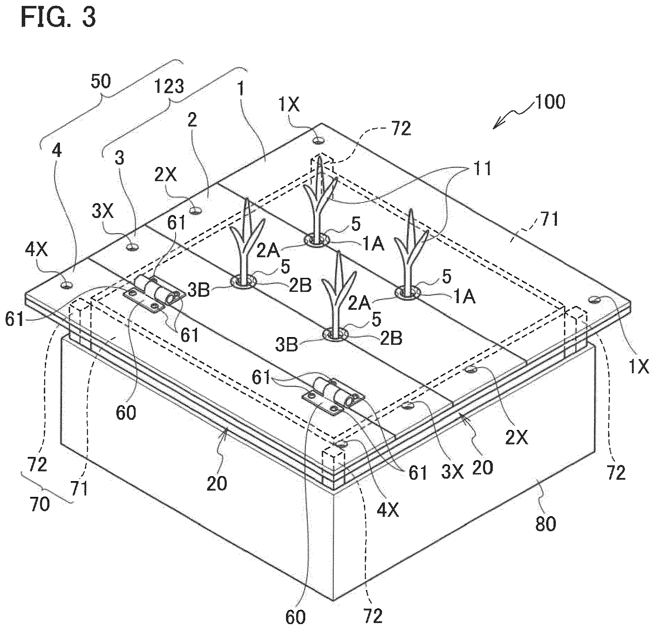

The underground part 12 of the plant 10 is positioned on a wire net 9 so that the stem of the plant 10 comes into contact with the elastic member 5 of an arced shape. The aboveground part 11 of the plant 10 protrudes upward from the partitioning portion 50. As for Figs. 2 and 3, they are depicted so that a gap exists between the stem of the plant 10 and the elastic member 5, but there may be no gap between the stem of the plant 10 and the elastic member 5.

The cultivation tank 80 accommodates the underground part 12 of the plant 10. In the cultivation tank 80, the wire net 9 is provided. The underground part 12 of the plant 10 is placed on the wire net 9. The wire net 9 is fixed to the four pillar portions 72. Roots 13 extending from the underground part 12 of the plant 10 penetrate the meshes of the wire net 9 and are immersed in a nutrient solution 81 stored at the bottom of the cultivation tank 80 below the wire net 9. The plant 10 absorbs the nutrient solution 81 from the roots 13 and grows.

As shown in Fig. 3, the plate like member 2, the plate like member 3 and the door member 4 are placed on the supporting portion 70. Thereafter, the eight screws 61 are screwed into the four screw holes 3C and the four screw holes 4C that are shown in Fig. 1, respectively. Thereby, the two hinges 60 are fixed to the plate like member 3 and the door member 4 by the eight screws 61. Accordingly, the door member 4 is rotatable about the rotation axis common to the two hinges 60. In other words, the door member 4 is in a state where the same can be opened or closed.

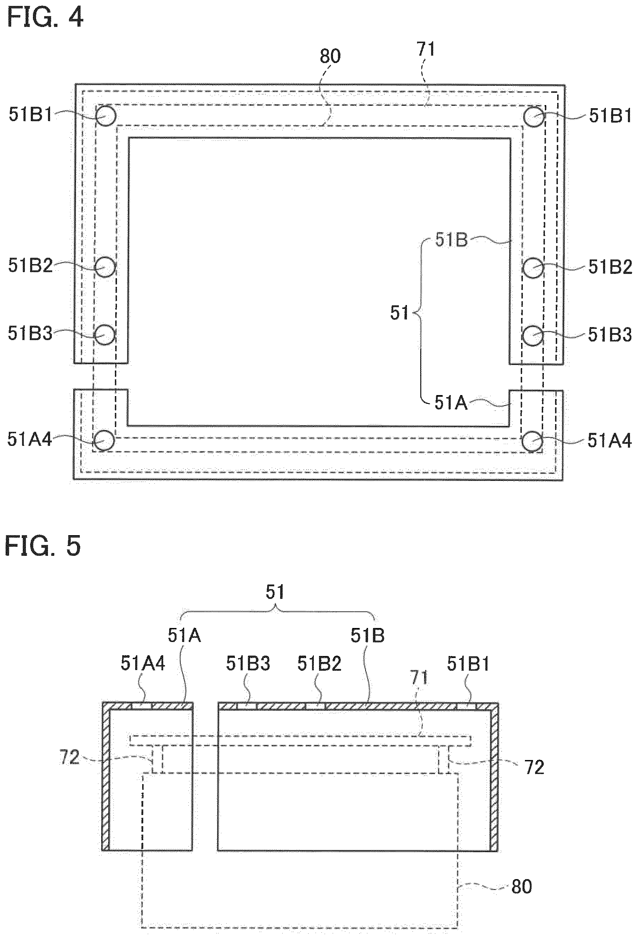

As shown in Fig. 4 and 5, the hydroponic cultivation apparatus 100 comprises a light shielding member 51. The light shielding member 51 includes a fixed light shielding member 51B and a door light shielding member 51A. In the fixed light shielding member 51B, through holes 51B1, 51B2, and 51B3 penetrating in its thickness direction are formed. In the door light shielding member 51A, a through hole 51A4 penetrating in its thickness direction is formed.

As shown in Figs. 4 and 5, the partitioning portion 50 is provided at a position above the cultivation tank 80 so as to cover the opening at the upper end of the cultivation tank 80. The light shielding member 51 is fixed to the partitioning portion 50. The light shielding member 51 is formed by integrating the fixed light shielding member 51B and the door light shielding member 51A. As can be inferred Fig. 4, in a plan view, the light shielding member 51 constitutes a frame like member surrounding the four side surfaces of the cultivation tank 80, and as can be inferred from Fig. 5, in a cross-sectional view, the light shielding member 51 constitutes a drop curtain like member covering the upper portions of the side surfaces of the cultivation tank 80.

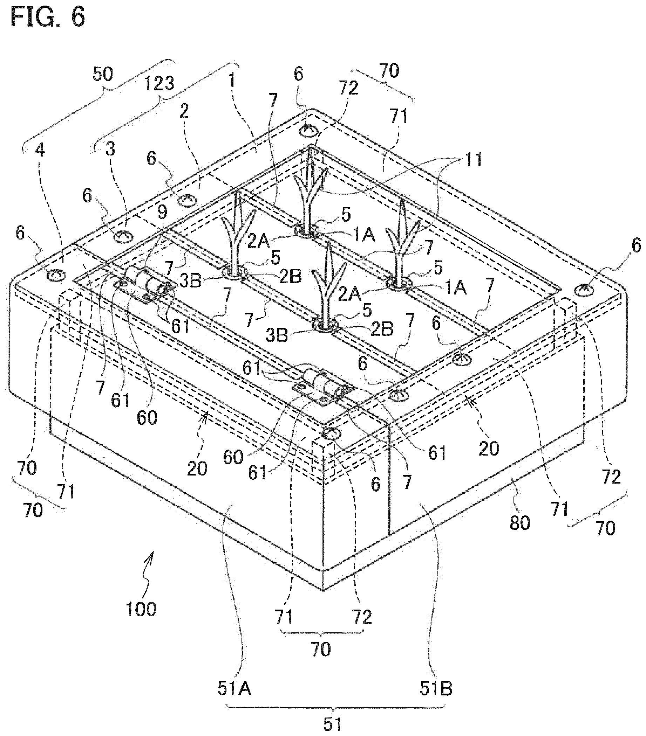

As shown in Fig. 6, the partitioning portion 50 and the light shielding member 51 are fixed to the frame portion 71 by using the eight screws 6, respectively. Specifically, the six screws 6 are inserted into the six through holes 51B1, 51B2, and 51B3 of the fixed light shielding member 51B and the six through holes IX, 2X, and 3X of the plate like members 1, 2, and 3 corresponding thereto, respectively. Further, the six screws 6 are inserted into the six through holes 71A of the frame portion 71 corresponding to the six through holes IX, 2X, and 3X of the plate like members 1, 2, and 3. Thereafter, the six screws 6 are screwed into female screw portions (not shown) formed in the six through holes 71A, respectively. According to this, the positions of the plate like members 1, 2, and 3 with respect to the cultivation tank 80 can be fixed. Therefore, it is possible to suppress the stem of the plant 10 from damaging due to the movement of the partitioning portion 50.

Two screws 6 for temporary fixing are respectively inserted into the two through holes 51A4 of the door light shielding member 51A and the two through holes 4X of the door member 4 corresponding thereto. Further, the two screws 6 for temporary fixing are respectively inserted into the two through holes 4X of the door member 4 and the two through holes 71A of the frame portion 71 corresponding thereto. The through holes 71A of the frame portion 71 corresponding to the through holes 4X of the door member 4 do not have female screw portions. Therefore, since the two screws 6 for temporary fixing described above are not screw-fixed, they move together with the door member 4 depending on the opening and closing operation of the door member 4.

As shown in Fig. 6, the light shielding member 7 is provided on the partitioning portion 50. The six light shielding members 7 are provided so as to straddle two adjacent plate like members of the plate like members 1, 2, and 3. The other three light shielding members 7 are provided so as to straddle the plate like member 3 and the door member 4. The light shielding member 7 covers each of a gap between the plate like members 1, 2, and 3 as well as a gap between the plate like member 3 and the door member 4. According to this, it is possible to prevent light from entering the cultivation tank 80 through the gap between the plate like members 1, 2, and 3 as well as the gap between the plate like member 3 and the door member 4. The light shielding member 7 may be stuck to the plate like members 1, 2, and 3 like an adhesive tape. In addition, the light shielding member 7 may be one in which light shielding multi-sheets generally used in agriculture are pasted with an adhesive. In addition, the light shielding member 7 may be a plastic sheet. It is preferable that the light shielding member 7 has black color from the viewpoint of light absorption.

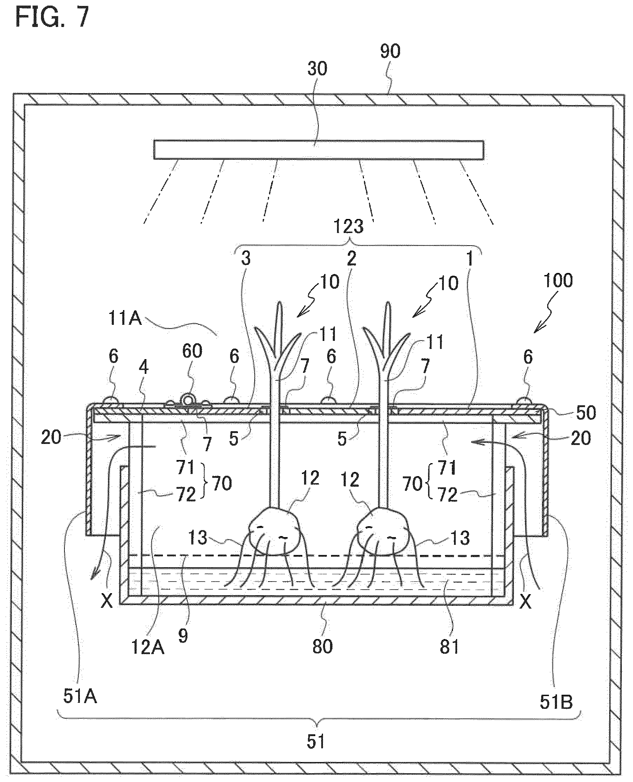

As shown in Fig. 7, the hydroponic cultivation apparatus 100 is provided in a housing 90 that is provided with a door through which a breeder of the plant 10 can enter and leave. A lighting portion 30 is provided in the housing 90. When leaves are formed on the aboveground part 11 of the plant 10, the leaves photosynthesize by light emitted from the lighting portion 30. As described above, the roots 13 extending from the underground part 12 of the plant 10 pass through the meshes of the wire net 9 and are immersed in the nutrient solution 81. Therefore, the plant 10 can absorb the nutrient solution 81 from the roots 13.

As shown in Fig. 7, the light shielding member 51 surrounds the outer surfaces of the cultivation tank 80 in a plan view and hangs down from the outer periphery of the partitioning portion 50 so that the flow path 20 of air extends downward along the outer surfaces of the cultivation tank 80. The light shielding member 51 includes the fixed light shielding member 51B that is attached to the fixed member 123 and the door light shielding member 51A that is attached to the door member 4 and is separated from the fixed light shielding member 51B.

As can be understood from Fig. 7, the flow path 20 of air exists between the partitioning portion 50 and the cultivation tank 80. Further, as can be inferred from Fig. 7, the outer periphery of the frame portion 71 is one size larger than the outer periphery of the cultivation tank 80 in a plan view. Therefore, the flow path 20 of air also extends between the outer surfaces of the cultivation tank 80 and the upward and downward extending portion of the light shielding member 51. Therefore, for example, as shown by the arrow X, an air flow is generated along the flow path 20 of air, and thereby, the atmosphere inside the cultivation tank 80 and the outside atmosphere naturally exchange. In addition, the flow path 20 of air between the partitioning portion 50 and the cultivation tank 80 is covered with the light shielding member 51. Therefore, it is suppressed that light is irradiated to the underground part 12 of the plant 10 in the cultivation tank 80.

According to the above-described configuration, even if air is allowed to flow naturally between the inner space of the cultivation tank 80 and the outer space of the cultivation tank 80 via the flow path 20 of air, the light shielding member 51 suppresses light from entering the inside of the cultivation tank 80 from the lateral position of the cultivation tank 80 via the flow path 20 of air. In addition, the breeder of the plant 10 can readily open the door member 4 together with the light shielding member 51, when viewing the space inside the cultivation tank 80.

In the present embodiment, the supporting portion 70 has a framework structure, and the gap between the cultivation tank 80 and the frame portion 71 constitutes the flow path 20 of air. However, the hydroponic cultivation apparatus 100 may not have the supporting portion 70 in a case where the flow path 20 of air is not required or in a case where a vending air opening is provided in the cultivation tank 80. In these cases, each of the plate like members 1, 2, and 3 may be fixed directly to the upper end of the cultivation tank 80.

The hydroponic cultivation apparatus 100 is provided with a fixing screw 61 for fixing the supporting portion 70, in particular, the frame portion 71 and each of the plate members 1, 2, and 3. The supporting portion 70 is fixed to the cultivation tank 80, and the plate like members 1, 2, and 3 are indirectly fixed to the cultivation tank 80 via the supporting portion 70. The plate like members 1, 2, and 3 may be fixed to the supporting portion 70 by means of nail, adhesive, cellophane tape, hook-and-loop fastener (Velcro tape (registered trademark)) or the like, instead of the screws 6. According to this, the positions of the plate like members 1, 2, and 3 with respect to the cultivation tank 80 can be fixed. Therefore, it is possible to suppress the stems of the plants 10 from damaging due to the movement of the partitioning portion 50.

As shown in Fig. 7, the partitioning portion 50 partitions the aboveground space 11A where the aboveground part 11 of the plant 10 grows and the underground space 12A where the underground part 12 of the plant 10 grows. The partitioning portion 50 includes the fixed member 123 and the door member 4 described above.

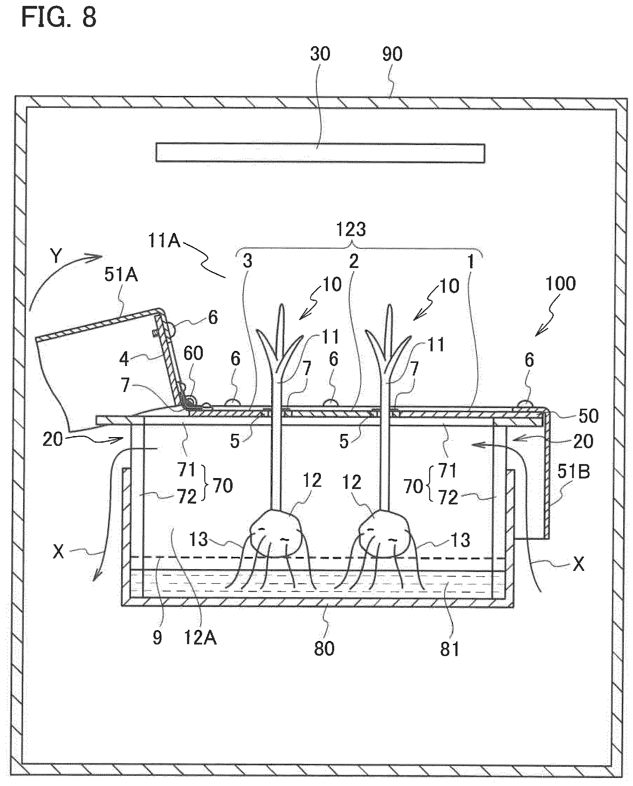

As shown in Fig. 8, the door member 4 is rotated around the rotation axis of the hinge 60 in the direction indicated by the arrow Y during the cultivation of the plant 10. Thereby, the door member 4 can be opened. At this time, since the door light shielding member 51A is attached to the door member 4 with the screw 6 for temporally fixing, it moves together with the door member 4. Therefore, the breeder of the plant 10 can view the state of the underground part 12 of the plant 10 during its growth. As for Fig. 8, since the door light shielding member 51A has a certain degree of hardness, it is drawn so that its shape does not change with the movement of the door member 4. However, when the door light shielding member 51A is formed of a flexible sheet, cloth, vinyl, or the like, its shape may be changed by the opening and closing operation of the door member 4.

As can be seen from Fig. 8, the position of the fixed member 123 with respect to the cultivation tank 80 is fixed, and the fixed member 123 maintains a closed state that suppresses light from entering the underground space 12A. On the other hand, the door member 4 is attached to the fixed member 123 in a state where the same is movable with respect to the fixed member 123, and changes to a closed state where it is suppressed that light enters the underground space 12A and to an open state where it is possible to view the underground space 12A. In other words, the door member 4 changes to a closed state where the underground part 12 of the plant 10 is irradiated with light or to an open state where the underground part 12 of the plant 10 can be visually recognized. Therefore, the breeder of the plant 10 can view the underground part 12 of the plant 10 in the space inside the cultivation tank 80 from above the cultivation tank 80 by opening the door member 4. In other word, the underground part 12 in the cultivation tank 80 can be viewed by a simple operation of opening the door member 4. In addition, if the door member 4 is opened, it is possible to readily photograph the underground part 12.

As shown in Fig. 8, the light shielding member 7 is flexible enough to be folded along the rotation axis of the hinge 60 when the door member 4 is opened. Therefore, the light shielding member 7 does not hinder the opening and closing operation of the door member 4. Further, the light shielding member 7 is not broken by the opening and closing operation of the door member 4.

As shown in Fig. 8, in the present embodiment, the door member 4 is a hinged door attached to the fixed member 123 via the hinge 60 and rotatable with respect to the fixed member 123. However, the door member 4 may be a sliding door that is slidably inserted into grooves of the fixed member 123.

As shown in Fig. 8, the door member 4 constitutes an end portion of the partitioning portion 50. Therefore, even without providing a handle on the door member 4, the breeder of the plant 10 can readily open the door member 4.

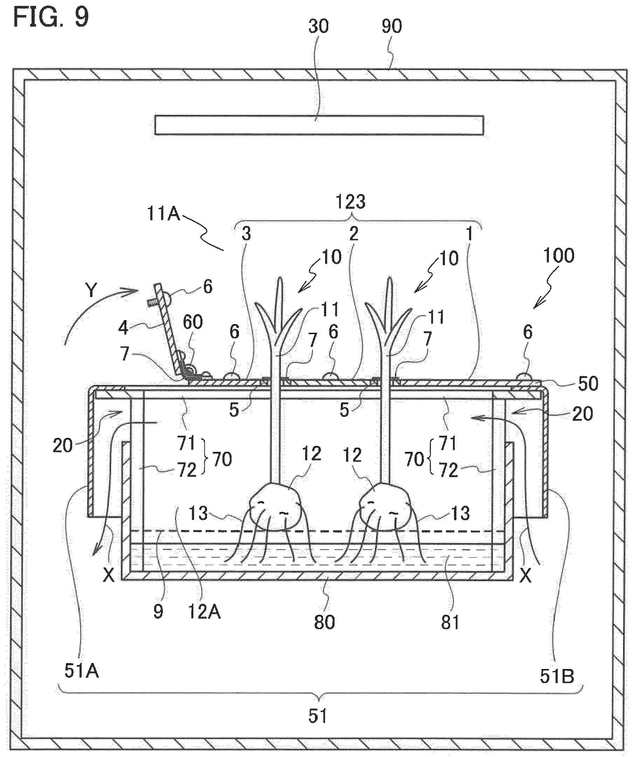

Next, with reference to Fig. 9, a light shielding member 51 of a modified example of the hydroponic cultivation apparatus 100 of the embodiment will be described. As shown in Fig. 9, the light shielding member 51 of the modified example of the hydroponic culture apparatus 100 of the embodiment is fixed to the frame portion 71. In other words, the light shielding member 51 is sandwiched by the partitioning portion 50 and the frame portion 71. In this case, the light shielding member 51 does not move together with the door member 4, and always covers the flow path 20 of air. In other words, only the door member 4 is opened or closed. Therefore, it is possible to readily open and close the door member 4. In addition, the fixed light shielding member 51B and the door light shielding member 51A that are shown in Fig. 4 are not separated and may be integrally molded. Furthermore, although the light shielding member 51 has the same shape as the whole shape shown in Fig. 4, it may be formed by assembling a series of thin plates or stitching vinyl sheets or the like. In other words, in the hydroponic cultivation apparatus 100 of the modified example as well, the light shielding member 51 surrounds the side surfaces of the cultivation tank 80 in a plan view and the flow path 20 of air extends downward along the side surfaces of the cultivation tank 80, as long as it hangs from the outer periphery of the partitioning portion 50. This also makes it possible to ventilate the underground space 12A while suppressing light from entering the underground space 12A through the flow path 20 of air. Further, according to this modified example, since the light shielding member 51 can be formed as one part, it is possible to form the light shielding member 51 more readily.

### REFERENCE SIGNS LIST

- 1, 2, 3: plate like member
- 4: door member
- 5: elastic member
- 7: light shielding member
- 10: plant
- 11: aboveground part
- 11A: aboveground space
- 12: underground part
- 12A: underground space
- 20: flow path of air
- 50: partitioning part
- 51: light shielding member
- 51B: fixed light shielding member
- 51A: door light shielding member
- 60: hinge
- 70: supporting portion
- 80: cultivation tank
- 100: hydroponic cultivation apparatus
- 123: fixed member

## Claims

1. A hydroponic cultivation apparatus (100) comprising:
a cultivation tank (80) that has a light shielding property and is configured to accommodate underground part (12) of a plant; and
a partitioning portion (50) that has a light shielding property and that is provided so as to cover an opening at an upper end of the cultivation tank (80) and partitions an underground space where the underground part (12) of the plant grows and an aboveground space where aboveground part (11) of the plant grows,
the partitioning portion (50) includes:
a fixed member (123), a position of which is fixed with respect to the cultivation tank (80), and including a through hole surrounding a stem of the plant and maintains a closed state where it is suppressed that light is irradiated to the underground part (12) of the plant; and
a door member (4) that is attached to the fixed member (123) in a state of being movable with respect to the fixed member (123) and changes to a closed state where it is suppressed that light is irradiated to the underground part (12) of the plant and to an open state where it is possible to view the underground part (12) of the plant,
**characterised in that** the door member (4) is a hatch door that is attached to the fixed member (123) via a hinge (60) and is rotatable about a rotational axis of the hinge (60) with respect to the fixed member (123) and **in that**
the hydroponic cultivation apparatus (100) further comprises a light shield member (51) that is provided so as to cover a gap between the door member (4) and the fixed member (123) and can be bended along the rotational axis of the hinge (60) when the door member (4) is opened.

2. A hydroponic cultivation apparatus (100) comprising:
a cultivation tank (80) that has a light shielding property and is configured to accommodate underground part (12) of a plant; and
a partitioning portion (50) that has a light shielding property and that is provided so as to cover an opening at an upper end of the cultivation tank (80) and partitions an underground space where the underground part (12) of the plant grows and an aboveground space where aboveground part (11) of the plant grows,
the partitioning portion (50) includes:
a fixed member (123), a position of which is fixed with respect to the cultivation tank (80), and including a through hole surrounding a stem of the plant and maintains a closed state where it is suppressed that light is irradiated to the underground part (12) of the plant; and
a door member (4) that is attached to the fixed member (123) in a state of being movable with respect to the fixed member (123) and changes to a closed state where it is suppressed that light is irradiated to the underground part (12) of the plant and to an open state where it is possible to view the underground part (12) of the plant,
**characterised by** a supporting member (70) that is installed to the cultivation tank (80) and supports the partitioning portion (50) above the upper end portion of the cultivation tank (80) so that a flow path of air is formed between the cultivation tank (80) and the partitioning portion (50); and
a light shielding member (51) that surrounds a side surface or side surfaces of the cultivation tank (80) in a plan view and hangs from an outer periphery of the partitioning portion (50) so that the flow path of air extends downward along the side surface or the side surfaces of the cultivation tank (80), wherein
the light shielding member (51) includes:
a fixed light shielding member (51B) that is attached to the fixed member (123); and
a door light shielding member (51A) that is attached to the door member (4) and is separated from the fixed light shielding member (51B).

3. The hydroponic cultivation apparatus (100) according to claim 1 or 2, wherein the door member (4) constitutes an end portion of the partitioning portion (50).

4. The hydroponic cultivation apparatus (100) according to any of claims 1 to 3, wherein
the fixed member (123) includes adjacent plate like members (1, 2, 3), wherein
the through hole is formed by a notch (1A, 2A, 2B, 3A) that is formed at an end surface of one of the adjacent plate like members (1, 2, 3) or a pair of notches (1A, 2A, 2B, 3A) that is provided on a pair of opposing surfaces of the adjacent plate like members (1, 2, 3).

5. The hydroponic cultivation apparatus (100) according to claim 4, wherein
an elastic member (5) that closes a gap between the stem of the plant and the notch (1A, 2A, 2B, 3A), and elastically deforms depending on a shape of the stem

6. The hydroponic cultivation apparatus (100) according to claim 4 or 5, further comprising another light shielding member covering a gap between the adjacent plate like members (1, 2, 3).

## Patentansprüche

1. Ein hydroponischer Kultivierungsapparat (100), der Folgendes umfasst:
einen Kultivierungsbehälter (80), der eine Lichtabschirmungseigenschaft aufweist und konfiguriert ist, um einen unterirdischen Teil (12) einer Pflanze aufzunehmen; und
einen Unterteilungsabschnitt (50), der eine Lichtabschirmungseigenschaft aufweist und der so bereitgestellt wird, dass er eine Öffnung am oberen Ende des Kultivierungsbehälters (80) abdeckt und einen unterirdischen Raum, in dem der unterirdische Teil (12) der Pflanze wächst, und einen oberirdischen Raum, in dem der oberirdische Teil (11) der Pflanze wächst, unterteilt,
wobei der Unterteilungsabschnitt (50) Folgendes beinhaltet:
ein feststehendes Element (123), dessen Position in Bezug auf den Kultivierungsbehälter (80) feststehend ist, und das ein Durchgangsloch beinhaltet, das einen Stiel der Pflanze umgibt und einen geschlossenen Zustand beibehält, wobei es unterdrückt wird, dass Licht auf den unterirdischen Teil (12) der Pflanze gestrahlt wird; und
ein Türelement (4), das am feststehenden Element (123) in einem Zustand angebracht ist, in dem es in Bezug auf das feststehende Element (123) beweglich ist, und das in einen geschlossenen Zustand wechselt, in dem es unterdrückt wird, dass Licht auf den unterirdischen Teil (12) der Pflanze gestrahlt wird, und das in einen offenen Zustand wechselt, in dem es möglich ist, den unterirdischen Teil (12) der Pflanze zu sehen,
**dadurch gekennzeichnet, dass**
das Türelement (4) eine Lukentür ist, die über ein Scharnier (60) am feststehenden Element (123) befestigt ist und um eine Drehachse des Scharniers (60) in Bezug auf das feststehende Element (123) drehbar ist, und **dadurch, dass**
die hydroponische Kultivierungsvorrichtung (100) ferner ein Lichtabschirmungselement (51) umfasst, das bereitgestellt wird, um einen Spalt zwischen dem Türelement (4) und dem feststehenden Element (123) abzudecken und das entlang der Drehachse des Scharniers (60) gebogen werden kann, wenn das Türelement (4) geöffnet wird.

2. Ein hydroponischer Kultivierungsapparat (100), der Folgendes umfasst:
einen Kultivierungsbehälter (80), der eine Lichtabschirmungseigenschaft aufweist und konfiguriert ist, um einen unterirdischen Teil (12) einer Pflanze aufzunehmen; und
einen Unterteilungsabschnitt (50), der eine Lichtabschirmungseigenschaft aufweist und der so bereitgestellt wird, dass er eine Öffnung an einem oberen Ende des Kultivierungsbehälters (80) abdeckt und einen unterirdischen Raum, in dem der unterirdische Teil (12) der Pflanze wächst, und einen oberirdischen Raum, in dem der oberirdische Teil (11) der Pflanze wächst, unterteilt,
wobei der Unterteilungsabschnitt (50) Folgendes beinhaltet:
ein feststehendes Element (123), dessen Position in Bezug auf den Kultivierungsbehälter (80) feststehend ist und das ein Durchgangsloch beinhaltet, das einen Stiel der Pflanze umgibt und einen geschlossenen Zustand beibehält, in dem unterdrückt wird, dass Licht auf den unterirdischen Teil (12) der Pflanze gestrahlt wird; und
ein Türelement (4), das am feststehenden Element (123) in einem Zustand angebracht ist, in dem es in Bezug auf das feststehende Element (123) beweglich ist, und das in einen geschlossenen Zustand wechselt, in dem es unterdrückt wird, dass Licht auf den unterirdischen Teil (12) der Pflanze gestrahlt wird, und in einen offenen Zustand wechselt, in dem es möglich ist, den unterirdischen Teil (12) der Pflanze zu sehen,
**gekennzeichnet durch**
ein tragendes Element (70), das am Kultivierungsbehälter (80) installiert ist und den Unterteilungsabschnitt (50) über dem oberen Endabschnitt des Kultivierungsbehälters (80) trägt, sodass ein Luftströmungsweg zwischen dem Kultivierungsbehälter (80) und dem Unterteilungsabschnitt (50) gebildet wird; und **durch**
ein Lichtabschirmungselement (51), das eine Seitenfläche oder Seitenflächen des Kultivierungsbehälters (80) in einer Draufsicht umgibt und von einem äußeren Umfang des Unterteilungsabschnitts (50) herabhängt, sodass sich der Luftströmungsweg entlang der Seitenfläche oder der Seitenflächen des Kultivierungsbehälters (80) nach unten erstreckt, wobei
das Lichtabschirmungselement (51) Folgendes beinhaltet:
ein feststehendes Lichtabschirmungselement (51B), das am feststehenden Element (123) angebracht ist; und
ein Tür-Lichtabschirmungselement (51A), das am Türelement (4) angebracht und vom festen Lichtabschirmungselement (51B) getrennt ist.

3. Der hydroponische Kultivierungsapparat (100) nach Anspruch 1 oder 2, wobei das Türelement (4) einen Endabschnitt des Unterteilungsabschnitts (50) bildet.

4. Der hydroponische Kultivierungsapparat (100) nach irgendeinem der Ansprüche von 1 bis 3, wobei
das feststehende Element (123) benachbarte plattenartige Elemente (1, 2, 3) beinhaltet, wobei
das Durchgangsloch ausgebildet ist durch eine Kerbe (1A, 2A, 2B, 3A), die gebildet wird an einer Endfläche von einem der benachbarten plattenartigen Elemente (1, 2, 3), oder durch ein Paar Kerben (1A, 2A, 2B, 3A), die auf einem Paar von gegenüberliegenden Flächen der benachbarten plattenartigen Elemente (1, 2, 3) bereitgestellt werden.

5. Der hydroponische Kultivierungsapparat (100) nach Anspruch 4, wobei
ein elastisches Element (5), das eine Lücke zwischen dem Stiel der Pflanze und der Kerbe (1A, 2A, 2B, 3A) schließt und sich in Abhängigkeit von der Form des Stiels elastisch verformt

6. Der hydroponische Kultivierungsapparat (100) nach Anspruch 4 oder 5,
der ferner ein weiteres Lichtabschirmungselement umfasst, das einen Spalt zwischen den benachbarten plattenartigen Elementen (1, 2, 3) abdeckt.

## Revendications

1. Un appareil de culture hydroponique (100) comprenant :
une cuve ou encore un réservoir de culture (80) qui présente une propriété de protection contre la lumière et qui est configuré pour loger la partie souterraine (12) d'une plante ; et
une portion de cloisonnement (50) qui présente une propriété de protection contre la lumière et qui est fournie de manière à couvrir une ouverture à une extrémité supérieure du réservoir de culture (80) et qui cloisonne un espace souterrain où pousse la partie souterraine (12) de la plante et un espace hors sol où pousse la partie hors sol (11) de la plante,
sachant que la portion de cloisonnement (50) inclut :
un élément fixe (123), dont la position est fixe par rapport au réservoir de culture (80), et incluant un trou traversant qui entoure une tige de la plante et maintient un état fermé où il est empêché que la lumière est irradiée vers la partie souterraine (12) de la plante ; et
un élément porte (4) qui est attaché à l'élément fixe (123) dans un état mobile par rapport à l'élément fixe (123) et qui passe à un état fermé où il est empêché que la lumière est irradiée vers la partie souterraine (12) de la plante, et à un état ouvert où il est possible de voir la partie souterraine (12) de la plante,
**caractérisé en ce que**
l'élément porte (4) est une porte à trappe (*hatch door*) qui est fixée à l'élément fixe (123) par une charnière (60) et qui peut tourner autour d'un axe de rotation de la charnière (60) par rapport à l'élément fixe (123) et **en ce que**
l'appareil de culture hydroponique (100) comprend en outre un élément de protection contre la lumière (51) qui est fourni de manière à couvrir un espace entre l'élément porte (4) et l'élément fixe (123) et qui peut être plié le long de l'axe de rotation de la charnière (60) lorsque l'élément porte (4) est ouvert.

2. Un appareil de culture hydroponique (100) comprenant :
une cuve ou encore un réservoir de culture (80) qui présente une propriété de protection contre la lumière et qui est configuré pour loger la partie souterraine (12) d'une plante ; et
une portion de cloisonnement (50) qui présente une propriété de protection contre la lumière et qui est fournie de manière à couvrir une ouverture à une extrémité supérieure du réservoir de culture (80) et qui cloisonne un espace souterrain où pousse la partie souterraine (12) de la plante et un espace hors sol où pousse la partie hors sol (11) de la plante,
sachant que la portion de cloisonnement (50) inclut :
un élément fixe (123), dont la position est fixe par rapport au réservoir de culture (80), et incluant un trou traversant entourant une tige de la plante et maintient un état fermé où il est empêché que la lumière est irradiée vers la partie souterraine (12) de la plante ; et
un élément porte (4) qui est attaché à l'élément fixe (123) dans un état mobile par rapport à l'élément fixe (123) et qui passe à un état fermé où il est empêché que la lumière est irradiée vers la partie souterraine (12) de la plante, et à un état ouvert où il est possible de voir la partie souterraine (12) de la plante,
**caractérisé par**
un élément de support (70) qui est installé sur le réservoir de culture (80) et qui soutient la portion de cloisonnement (50) au-dessus de la portion d'extrémité supérieure du réservoir de culture (80) de manière qu'un chemin d'écoulement d'air soit formé entre le réservoir de culture (80) et la portion de cloisonnement (50) ; et **par**
un élément de protection contre la lumière (51) qui entoure une surface latérale ou des surfaces latérales du réservoir de culture (80) dans une vue en plan et qui est suspendu depuis une périphérie extérieure de la portion de cloisonnement (50) de manière que le chemin d'écoulement d'air s'étend vers le bas le long de la surface latérale ou des surfaces latérales du réservoir de culture (80), sachant que
l'élément de protection contre la lumière (51) inclut :
un élément fixe de protection contre la lumière (51B) qui est attaché à l'élément fixe (123) ; et
un élément de la porte de protection contre la lumière (51A) qui est attaché à l'élément porte (4) et qui est séparé de l'élément fixe de protection contre la lumière (51B).

3. L'appareil de culture hydroponique (100) d'après la revendication 1 ou 2, sachant que
l'élément porte (4) constitue une portion d'extrémité de la portion de cloisonnement (50).

4. L'appareil de culture hydroponique (100) d'après l'une quelconque des revendications de 1 à 3, sachant que
l'élément fixe (123) inclut des éléments de type plaque (1, 2, 3) adjacents, sachant que
le trou traversant est formé par une encoche (1A, 2A, 2B, 3A) qui est formée sur une surface d'extrémité de l'un des éléments de type plaque (1, 2, 3) adjacents, ou une paire d'encoches (1A, 2A, 2B, 3A) qui est fournie sur une paire de surfaces opposées des éléments de type plaque (1, 2, 3) adjacents.

5. L'appareil de culture hydroponique (100) d'après la revendication 4, sachant que
un élément élastique (5) qui ferme un espace entre la tige de la plante et l'encoche (1A, 2A, 2B, 3A), et se déforme élastiquement en fonction de la forme de la tige

6. L'appareil de culture hydroponique (100) d'après la revendication 4 ou 5, comprenant en outre un autre élément de protection contre la lumière couvrant un espace entre les éléments de type plaque (1, 2, 3) adjacents.
